# EUROPEAN PATENT APPLICATION

(11) **EP 4 815 356 A1**
(43) Date of publication of application: **30.09.2026**
(21) Application number: 25165692.2
(22) Date of filing: 24.03.2025
(51) Int. Cl.: H04L 5/00, H04W 76/15, H04W 88/08

(54) **SYSTEM AND METHOD FOR COMMUNICATING WITH A USER EQUIPMENT**

(71) Applicant: KONTRON TRANSPORTATION FRANCE SAS, 78066 St Quentin Yvelines Cedex (FR)
(72) Inventor: BARAKA, Sylia, 78280 Guyancourt (FR); PISON, Laurent, 78760 Jouars Pontchartrain (FR); ASTE, Thierry, 91440 Bures sur Yvette (FR); GRUET, Christophe, 78180 Montigny le Bretonneux (FR)
(74) Representative: Weiser Voith Gugler Patentanwälte Partnerschaft

(57) **Abstract**

A system (1) for communicating with a UE (2) comprises a first transceiver (4₁) serving a first cell (5₁) having a first PCI (PCI₁) and a second transceiver (4₂) serving a second cell (5₂) having a second PCI (PCI₂), wherein the first and second cells overlap and the first and second transceivers communicate to the UE in one frequency channel (8), wherein a first SSB (SSB₁) of the first transceiver and a second SSB (SSB₂) of the second transceiver are communicated in said frequency channel at different times (t₁, t₂) or frequency portions (P₁, P₂) and wherein a first BWP (BWP₁) of the first transceiver and a second BWP (BWP₂) of the second transceiver are communicated in said frequency channel at different frequency portions (P₃, P₄). A method (16) may be carried out by said system.

## Description

The present invention relates to a system for communicating with a User Equipment (UE), the system comprising a first transceiver serving a first cell having a first Physical Cell Identity (PCI) and a second transceiver serving a second cell having a second PCI. The present invention further relates to a method for communicating with a UE which may be carried out by said system.

Systems of the above-mentioned kind are used in 5G communication networks to communicate with one or more UEs in two cells. To avoid crosstalk, the transceivers of neighbouring cells typically communicate their messages in different radio frequency channels (in the following "frequency channels"), in particular their Synchronisation Signal Blocks (SSBs) indicating the PCI of the respective cell and their Bandwidth Parts (BWPs) including payload data. Hence, a UE can connect via the respective SSB to one cell at a time in one respective frequency channel by scanning the frequency spectrum to identify the SSB in that frequency channel and synchronising according to the SSB, and receive the BWP from the transceiver of that cell in that frequency channel. To switch to another cell whose transceiver communicates the SSB and BWP in another frequency channel, the UE can scan the frequency spectrum to identify the SSB of the other cell in the other frequency channel, synchronise according to the other SSB and receive the BWP from the other transceiver in the other frequency channel. This ensures a strict spectral separation and, thus, low crosstalk, but often inhibits an efficient utilisation of the spectrum, in particular when a BWP of a transceiver of a currently connected cell does not require or utilise the whole bandwidth of the respective frequency channel. In particular, in mission critical and private communication networks like railway communication networks, where the available spectrum is sparse, such an inefficient spectral utilisation impedes redundant and, thus, secure data transmission.

It is an object of the present invention to overcome the limitations of the prior art and to provide a system and a method which allow for an improved communication with a UE.

This object is achieved in a first aspect of the invention by a system as defined at the outset which is distinguished in that the first and second cells overlap and the first and second transceivers are configured to communicate to the UE in one and the same frequency channel, wherein a first SSB of the first transceiver indicating the first PCI and a second SSB of the second transceiver indicating the second PCI are communicated in said frequency channel at different times or frequency portions and wherein a first BWP of the first transceiver and a second BWP of the second transceiver are communicated in said frequency channel at different frequency portions.

The present invention employs several transceivers to serve overlapping cells in one and the same frequency channel. For a fast and efficient connection to one or more cells, the SSBs of different transceivers are communicated with different PCIs at different times or at different frequency portions of said frequency channel, and for an efficient utilisation of the frequency channel, the BWPs of different transceivers are communicated at different frequency portions of said frequency channel.

In order to receive the BWP of each transceiver in said frequency channel, the UE can select said frequency channel once and connect to each cell via the respective SSB. Additional filtering or an adaption of the filtering by the UE is not necessary to listen to the BWPs of different transceivers. Consequently, the UE may either connect to several cells and listen to the BWPs of several (optionally synchronised) transceivers at a time, or connect to one cell and listen to the BWP of one transceiver at a time and switch fast and efficiently from one cell to another and, thus, from listening to the BWP of one transceiver to listening to the BWP of another transceiver. Hence, whenever one of the transceivers fails, the other transceiver can fast and effectively compensate for the failure without lengthy channel switching and interruption.

The efficient spectral utilisation of the frequency channel allows to simultaneously transmit redundant data in the BWPs of several transceivers or re-transmit data by one transceiver in case that data could not be received by the UE when transmitted by another transceiver before. Hence, a robust and secure data transmission is achieved, in particular for mission critical and private communication networks like railway communication networks.

As a result, the system of the invention achieves an improved communication with the UE.

In a preferred embodiment, at least one of the first and second transceivers is configured to communicate to the UE a connection command indicating whether to connect to the first and/or second cell. Thereby, the first and/or second transceiver can instruct the UE to communicate in the first cell with the first PCI and/or in the second cell with the second PCI, e.g., depending on the current loads in the cells, signal strengths, interference conditions, proper functioning of the transceivers, etc. In particular, when the transceiver of one cell fails, the transceiver of the other cell may detect the failure and instruct the UE to connect to the other cell.

Advantageously, at least one of the first and second SSBs spans more than half of a channel width of said frequency channel and the first and second transceivers are configured to communicate the first and second SSBs at different times. This allows, e.g., to use a large sub carrier spacing (SCS) for the SSBs in said frequency channel and, thus, to reduce inter carrier interference and, in case of a moving UE, interference caused by the Doppler effect. As a result, the UE can particularly reliably receive the SSBs and connect to one or more of the cells. For instance, when said frequency channel has a channel width of 10 MHz, the SSBs may have an SCS of 30 kHz and, thus, a size of 7.2 MHz (which would not be possible using two adjacent frequency channels having a channel width of 5 MHz each).

To prevent or reduce interference, it is favourable, when the first and second BWPs are separated by a frequency gap, in particular by a frequency gap composed of one or more unused Resource Blocks (RBs).

In a beneficial embodiment, the first and/or the second transceiver is configured to dynamically adjust the size of the frequency portion of at least one of the first and second BWPs, preferably in dependence on a given communication load of the UE, of the first cell and/or of the second cell. Thereby, the BWPs are dynamically adapted by the first and second transceivers, e.g., to improve load balance, throughput, energy efficiency and/or to reduce interference.

The first and second transceivers may each be formed by any device capable to perform the functions described herein, e.g., by a base station or parts thereof. In an advantageous embodiment, the first transceiver is formed by a first Remote Radio Head (RRH) and the second transceiver is formed by a second RRH. The RRHs may be placed close to one another with little effort, irrespective of base station placement, to achieve a large overlap between the first and second cells. In a particularly advantageous variant of this embodiment, the system further comprises at least two base stations configured to serve the first and second RRHs. Thereby, a redundancy on base stations is provided to enhance the robustness of the system, as the failure of one of the base stations can be compensated by the other base station.

In a further preferred embodiment, the first and second transceivers are configured to communicate the same data via the first and second BWPs. In this embodiment, the UE may listen redundantly to both BWPs or listen to one BWP and fast and efficiently switch to the other BWP in case of a failure, in each case increasing robustness and security of the communication, in particular for mission critical and private communication networks like railway communication networks.

It is beneficial when the first and second transceivers are mounted on a common mounting structure to collocate the cells and achieve a large overlap of the first and second cells.

The improved communication according to the invention may be extended to more than two transceivers. To this end, the system may comprise at least a third transceiver serving a third cell having a third PCI and overlapping the first and second cells, wherein the third transceiver is configured to communicate to the UE in said frequency channel, wherein a third SSB of the third transceiver indicating the third PCI is communicated in said frequency channel at a different time or frequency portion than the first and second SSBs and wherein a third BWP of the third transceiver is communicated in said frequency channel at a different frequency portion than the first and second BWPs.

In a second aspect, the invention provides a method for communicating with a UE, the method comprising
by a first transceiver serving a first cell having a first PCI, communicating a first SSB indicating the first PCI and a first BWP to the UE in a frequency channel;
by a second transceiver serving a second cell having a second PCI and overlapping the first cell, communicating a second SSB indicating the second PCI and a second BWP to the UE in said frequency channel;
wherein the first and second SSBs are communicated in said frequency channel at different times or frequency portions and the first and second BWPs are communicated in said frequency channel at different frequency portions.

The method may be carried out by the above-mentioned system and make use of any of the above-mentioned embodiments of the system to achieve the above-mentioned advantages.

The invention will now be described by means of exemplary embodiments thereof with reference to the enclosed drawings, in which:
Fig. 1 shows a system according to the invention in the process of communicating with a UE in a schematic diagram;
Fig. 2 shows a frequency band and a frequency channel therein that is used by the system of Fig. 1 to communicate to the UE in a schematic frequency diagram;
Fig. 3 shows a first exemplary allocation of SSBs and BWPs communicated by two transceivers of the system of Fig. 1 in the frequency channel of Fig. 2 in a resource grid;
Fig. 4 shows a second exemplary allocation of SSBs and BWPs communicated by two transceivers of the system of Fig. 1 in the frequency channel of Fig. 2 in a resource grid; and
Fig. 5 shows a third exemplary allocation of SSBs and BWPs communicated by three transceivers of the system of Fig. 1 in the frequency channel of Fig. 2 in a resource grid; and
Fig. 6 shows a method according to the invention for communicating with a UE which may be carried out by the system of Fig. 1 in a flow diagram.

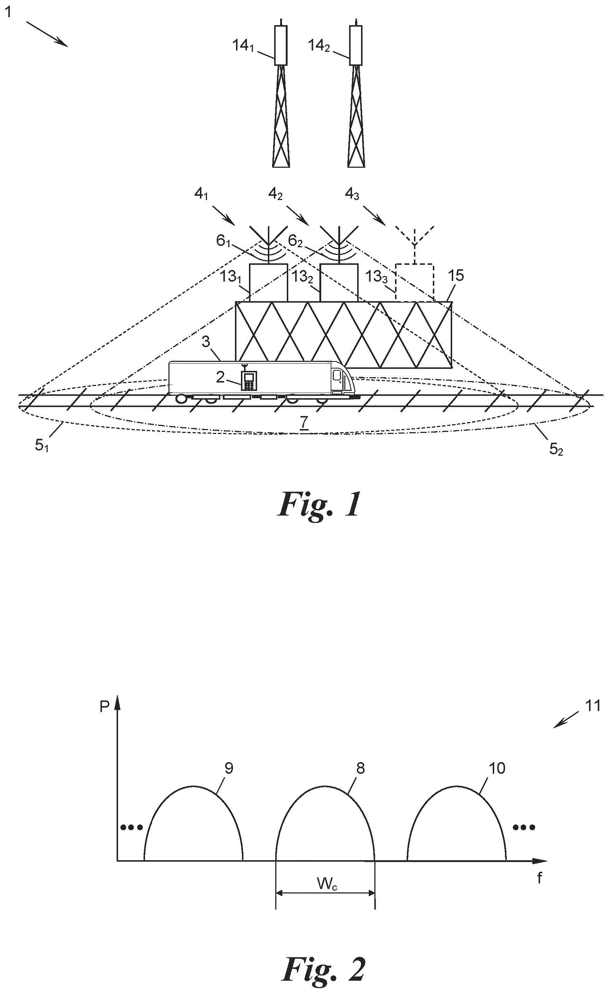

Fig. 1 shows a system 1 for communicating with a User Equipment (UE) 2, in particular according to a 3GPP standard like 5G or higher. In the example of Fig. 1, the system 1 is utilised in a railway application to communicate with a UE 2 carried on a train 3. The system 1 may be utilised in many other, in particular mission critical, applications to communicate with one or more static or moving UEs. The system 1 may be au-tarkic or form part of a larger network.

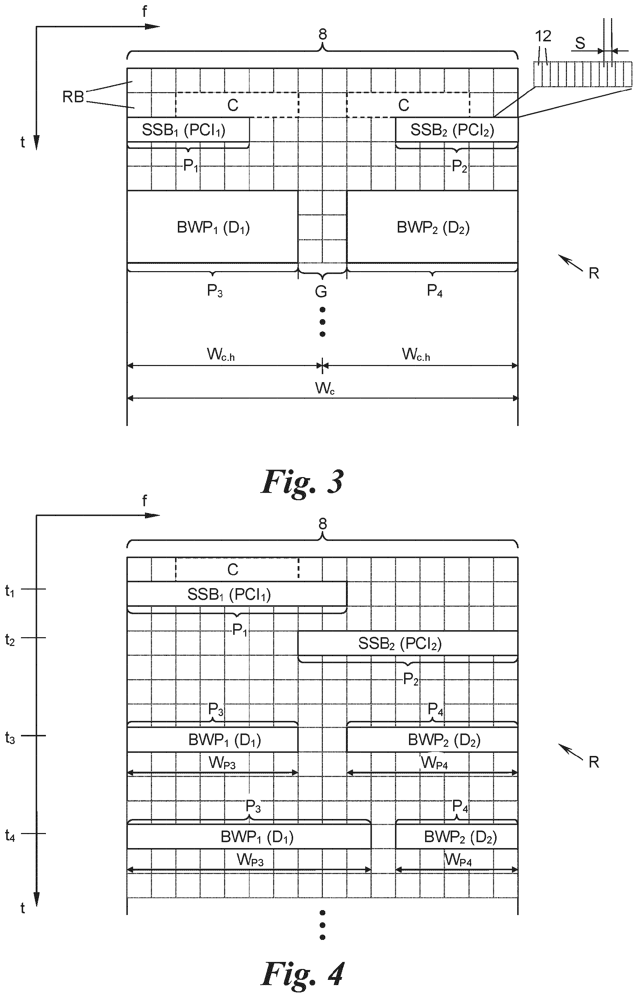

The system 1 has at least a first transceiver 4₁ serving a first cell 5₁ with a first Physical Cell Identity PCI₁ (Fig. 3) and a second transceiver 4₂ serving a second cell 5₂ with a second PCI PCI₂ (Fig. 3). To serve the cells 5₁, 5₂ the transceivers 4₁, 4₂ are capable to transmit and receive radio signals 6₁, 6₂ within the respective cell 5₁, 5₂.

As can be seen in Fig. 1, the first and second cells 5₁, 5₂ overlap in an overlapping region 7 which may, e.g., span more than 40%, e.g. more than 60%, in particular more than 80% of one of the cells 5₁, 5₂, e.g. of the larger one of the cells 5₁, 5₂ (if any) .

With reference to Figs. 1 - 3, the system 1 performs a robust communication with the UE 2 in the overlapping region 7 in that the first and second transceivers 4₁, 4₂ use one and the same frequency channel 8 for communicating to the UE 2.

Fig. 2 shows said frequency channel 8 and neighbouring frequency channels 9, 10 of the same frequency band 11 in a frequency diagram. The frequency band 11 and the frequency channels 8 may be defined by a standard, e.g., by a 3GPP standard like 5G, 6G, etc. Accordingly, the frequency channel 8 may, e.g., be defined by an Absolute Radio Frequency Channel Number (ARFCN), in particular by a New Radio (NR) NR-ARFCN.

As illustrated in a first exemplary allocation of a resource grid R for the frequency channel 8 in Fig. 3, the first transceiver 4₁ communicates a first Synchronisation Signal Block (SSB) SSB₁ indicating the first PCI PCI₁ in a first frequency portion P₁ of the frequency channel 8 (here: at the lower end of the frequency channel 8) and the second transceiver 4₂ communicates a second SSB SSB₂ indicating the second PCI PCI₂ in a different second frequency portion P₂ of the frequency channel 8 (here: at the upper end of the frequency channel 8). The transceivers 4₁, 4₂ communicate the SSBs SSB₁, SSB₂ at least once, typically repetitively, in particular periodically (not shown).

The first transceiver 4₁ communicates a first BWP BWP₁ comprising first data D₁ in a third frequency portion P₃ of the frequency channel 8 (here: in the lower half of the frequency channel 8) and the second transceiver 4₂ communicates a second BWP BWP₂ comprising the same or different second data D₂ in a different fourth frequency portion P₄ of the frequency channel 8 (here: in the upper half of the frequency channel 8). The first and second BWPs BWP₁, BWP₂ may be communicated at the same time (Figs. 3 and 4) or at different times (not shown), e.g., alternatingly. The first and second BWPs BWP₁, BWP₂ may (and typically will) each be contiguous and may be contiguously adjacent in frequency, or partly overlapping in frequency, or separated by a gap G of, e.g., one, two or more Resource Blocks RB, to avoid or reduce cross-talk. When the first and second BWPs BWP₁, BWP₂ overlap partly, radio resource conflicts may optionally be obviated via scheduling restrictions and/or control channel configurations, e.g. of the Physical Downlink Control Channel (PDCCH), of the Physical Downlink Control Channel (PUCCH), and/or of the Random Access Channel (RACH).

The UE 2 can select the frequency channel 8 once and connect via the first SSB SSB₁ to the first cell 5₁ to receive the first BWP BWP₁ and/or connect via the second SSB SSB₂ to the second cell 5₂ and receive the second BWP BWP₂. Thus, when one of the transceivers 4₁/4₂ fails, the UE 2 can listen to the BWP BWP₂/BWP₁ of the other transceiver 4₂/4₁ in the frequency channel 8.

The UE 2 may be configured to locally determine to which cell/s 5₁, 5₂ to connect, e.g. by means of connection preference rules. Alternatively, e.g. in case of a failure or for using that cell 5₁, 5₂ with a better connection to the UE 2, the first and/or the second transceiver 4₁, 4₂ may communicate to the UE 2 a connection command C indicating whether to connect to the first and/or second cell 5₁, 5₂.

Alternatively or in addition to communicating the first and second SSBs SSB₁, SSB₂ in different frequency portions P₁, P₂ of the frequency channel 8, the first and second transceivers 4₁, 4₂ may communicate the first and second SSBs SSB₁, SSB₂ at different times t₁, t₂, e.g. as depicted in a second exemplary allocation of the resource grid R for the frequency channel 8 in Fig. 4.

In the example of Fig. 4, each of the first and second SSBs optionally spans more than half W_{c,h} of a channel width W_{c} of the frequency channel 8. Thus, a large subcarrier spacing (SCS) S of the subcarriers 12 may be used for the first and second SSBs SSB1, SSB2. For instance, the first and second SSBs SSB₁, SSB₂ may each have a SCS S of 30 kHz and a total size of 7.2 MHz when using a channel width W of 10 MHz.

Fig. 4 further illustrates an optional dynamic adjustment of the size W_{P3} of the third frequency portion P₃ by the first transceiver 4₁ and/or of the size WP₄ of the fourth frequency portion P₄ by the second transceiver 4₁, 4₂. In Fig. 4, the third and fourth portions P₃, P₄ of the BWPs BWP₁, BWP₂ have equal sizes W_{P3}, W_{P4} at a time t₃ and unequal sizes W_{P3}, W_{P4} at a later time t₄. In one variant, at least one of the sizes W_{P3}, W_{P4} is adjusted in dependence of a communication load of the UE 2, of the first cell 5₁ and/or of the second cell 5₂. For example, after determining that the second cell 5₂ has a higher total communication load, the first and second transceivers 4₁, 4₂ may enlarge the size W_{P3} of the third frequency portion P₃ of the first BWP BWP₁ and reduce the size W_{P4} of the fourth frequency portion P₄ of the second BWP BWP₂. In other variants, at least one of the sizes W_{P3}, W_{P4} is adjusted in dependence on another metric, e.g., on a traffic demand, power efficiency, interference conditions, etc.

The first and second transceivers 4₁, 4₂ may each be formed by any device that is capable to perform the functions described herein, in particular to generate and communicate data like the respective SSB, the respective BWP, the connection command C, etc. In one example (not shown), the first and second transceivers 4₁, 4₂ are each formed by a base station or parts thereof, e.g. by different parts of one and the same base station. In the example of Fig. 1, the first transceiver 4₁ is formed by a first Remote Radio Head (RRH) 13₁ and the second transceiver 4₂ is formed by a second RRH 13₂. In one variant of this example, the system 1 comprises a first base station 14₁ serving the first RRH 13₁ (and optionally the second RRH 13₂) and a second base station 14₂ serving the second RRH 13₂ (and optionally the first RRH 13₁) for redundancy purposes. The base stations 14₁, 14₂ may be embodied as Base Transceiver Stations (BTSs) according to a 3GPP standard. In another variant of this example, the first and second RRHs 13₁, 13₂ may be served by one common base station (not shown). In another example (not shown), the first and second transceivers 14₁, 14₂ may be formed by different parts of one and the same RRH.

As shown in Fig. 1, the first and second transceivers 4₁, 4₂ (here: RRHs 13₁, 13₂) may optionally be collocated, e.g., within a mutual distance of less than 100 meters, in particular of less than 20 meters, e.g. of less than 10 meters to have a large overlapping region 7. Moreover, the first and second transceivers 4₁, 4₂ (here: RRHs 13₁, 13₂) may be mounted on a common mounting structure 15 (Fig. 1), e.g. on a common frame, pole, tower, etc. or on different mounting structures (not shown) .

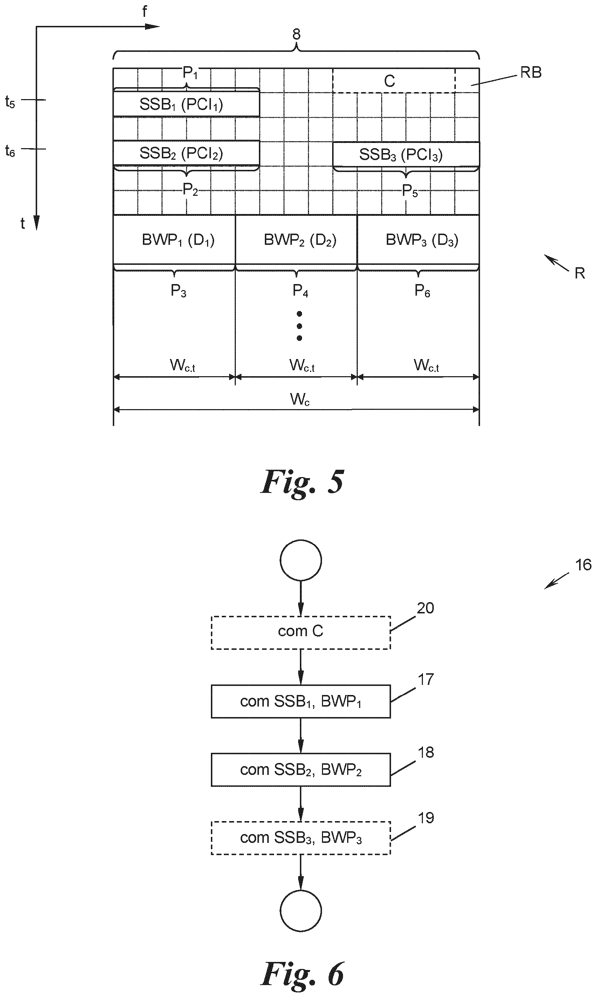

With reference to Figs. 1 and 5, in a further embodiment the system 1 optionally comprises more than two transceivers 4₁, 4₂, e.g. a third transceiver 4₃ (in Fig. 1: dashed RRH 13₃), a fourth transceiver 4₄ (not shown), etc., generally 4₁, each serving a respective cell 5ᵢ having a respective PCI PCIᵢ, wherein all the cells 5ᵢ overlap in the overlapping region 7 and all the transceivers 4ᵢ use one and the same frequency channel 8 to communicate with the UE 2 in the overlapping region 7. All the above-mentioned embodiments and variants are applicable to this embodiment by analogy, in particular the communication of a connection command C indicating whether to connect to one or more specific cells 5₁, the BWP separation by one or more frequency gaps G, the dynamic adjustment of the size W_{Pi} of a frequency portion of one or more BWPs, the embodiment of the transceivers 4ᵢ as RRHs 13₁, the serving of the RRHs 13ᵢ by one or more base stations 14₁, and the mounting of the transceivers 4ᵢ on a common mounting structure 15.

For instance, as depicted in a third exemplary allocation of the resource grid R for the frequency channel 8 in Fig. 5, in a three transceiver embodiment, the first, second and third transceivers 4₁, 4₂, 4₃ may communicate in the frequency channel 8 respective first, second and third SSBs SSB₁, SSB₂, SSB₃ indicating respective first, second and third PCIs PCI₁, PCI₂, PCI₃ at different times t₅, t₆ and/or at different frequency portions P₁, P₂, P₅ of the frequency channel 8, and respective first second and third BWPs BWP₁, BWP₂, BWP₃ at different frequency portions P₃, P₄, P₆ of the frequency channel 8. In the example of Fig. 5, the third transceiver 4₃ communicates the third SSB SSB₃ at a different frequency portion P₅ (at the upper end of the frequency channel 8) than the first and second SSBs SSB₁, SSB₂ (at the lower end of the frequency channel 8) communicated by the first and second transceivers 4₁, 4₂.

Optionally, one or more of the first, second and third SSBs SSB₁, SSB₂, SSB₃ may span more than a third W_{c,t} of the channel width W_{c} when the transceivers 4₁ - 4₃ communicate some of the SSBs SSB₁, SSB₂, SSB₃ at different times.

With reference to Fig. 6 a method 16 that may optionally be carried out by the system 1 shall be exemplified. The method 15 may make use of any of the embodiments and variants described with respect to the system 1 and vice versa.

In a first step 17 of the method 16, the first transceiver 4₁ serving the first cell 5₁ having the first PCI PCI₁ communicates the first SSB SSB₁ indicating the first PCI PCI₁ and the first BWP BWP₁ to the UE 2 in the frequency channel 8.

In a second step 18 of the method 16, the second transceiver 4₂ serving the second cell 5₂ having the second PCI PCI₂ and overlapping the first cell 5₁ in the overlapping region 7 (Fig. 1) communicates the second SSB SSB₂ indicating the second PCI PCI₂ at a different frequency portion (Fig. 3) or at a different time (Fig. 4) than the first SSB SSB₁ and the second BWP BWP₂ at a different frequency portion (Figs. 3 and 4) than the first BWP BWP₁ to the UE 2 in the frequency channel 8.

The first and second steps 17, 18 may be carried out as described above with reference to Figs. 1 - 4. For instance, the data D₁, D₂ comprised in the first and second BWPs BWP₁, BWP₂ (Fig. 3) may either be different or be the same, and may be communicated at different times or at the same time; and at least one of the first and second SSBs SSB₁, SSB₂ optionally spans more than half of the channel width W of the frequency channel 8 when the first and second transceivers 4₁, 4₂ communicate the first and second SSBs SSB₁, SSB₂ at different times t₁, t₂ (Fig. 4).

The method 16 is optionally carried out by the system 1 comprising more than two transceivers 4₁, 4₂, e.g. three transceivers 4₁ - 4₃ (Figs. 1 and 5). Thereby, in an optional third step 19 of the method 15, the third transceiver 4₃ serving the third cell 5₃ having the third PCI PCI₃ and overlapping the first and second cells 5₁, 5₂ communicates the third SSB SSB₃ indicating the third PCI PCI₃ and the third BWP BWP₃ to the UE 2 in the frequency channel 8. The third transceiver 4₃ communicates the third SSB SSB₃ in the frequency channel 8 at a different time or frequency portion than the first and second SSBs SSB₁, SSB₂ and the third transceiver 4₃ communicates the third BWP BWP₃ in the frequency channel 8 at a different frequency portion than the first and second BWPs BWP₁, BWP₂ (Fig. 5).

In an optional (here: preceding) fourth step 20 of the method 16, at least one of the first and second (and optional third) transceivers 4₁, 4₂, (4₃) communicates to the UE 2 the connection command C indicating whether to connect to the first and/or to the second (and/or to the third) cell 5₁, 5₂, (5₃) e.g. as described above with reference to Fig. 2.

It is noted that steps 17 and 18 and optional steps 19 and 20 of the method 16 may be carried out in any order and also in parallel (Figs. 3 - 5) as long as one of the steps does not depend on the result of another one of the steps.

The invention is not restricted to the specific embodiments described above but encompasses all variants, modifications and combinations thereof that fall within the scope of the appended claims.

## Claims

1. A system for communicating with a User Equipment, UE, (2) the system (1) comprising a first transceiver (4₁) serving a first cell (5₁) having a first Physical Cell Identity, PCI, (PCI₁) and a second transceiver (4₂) serving a second cell (5₂) having a second PCI (PCI₂), **characterised in that** the first and second cells (5₁, 5₂) overlap and the first and second transceivers (4₁, 4₂) are configured to communicate to the UE (2) in one and the same frequency channel (8), wherein a first Synchronisation Signal Block, SSB, (SSB₁) of the first transceiver (4₁) indicating the first PCI (PCI₁) and a second SSB (SSB₂) of the second transceiver (4₂) indicating the second PCI (PCI₂) are communicated in said frequency channel (8) at different times (t₁, t₂) or frequency portions (P₁, P₂) and wherein a first Bandwidth Part, BWP, (BWP₁) of the first transceiver (4₁) and a second BWP (BWP₂) of the second transceiver (4₂) are communicated in said frequency channel (8) at different frequency portions (P₃, P₄).

2. The system according to claim 1, wherein at least one of the first and second transceivers (4₁, 4₂) is configured to communicate to the UE (2) a connection command (C) indicating whether to connect to the first and/or second cell (5₁, 5₂).

3. The system according to claim 1 or 2, wherein at least one of the first and second SSBs (SSB₁, SSB₂) spans more than half (W_{c,h}) of a channel width (W_{c}) of said frequency channel (8)and the first and second transceivers (4₁, 4₂) are configured to communicate the first and second SSBs (SSB₁, SSB₂) at different times (t₁, t₂).

4. The system according to any one of claims 1 to 3, wherein the first and second BWPs (BWP₁, BWP₂) are separated by a frequency gap (G).

5. The system according to any one of claims 1 to 4, wherein the first and/or the second transceiver (4₁, 4₂) is configured to dynamically adjust the size (W_{P3}, W_{P4}) of the frequency portion (P₃, P₄) of at least one of the first and second BWPs (BWP₁, BWP₂), preferably in dependence on a given communication load of the UE (2), of the first cell (5₁) and/or of the second cell (5₂).

6. The system according to any one of claims 1 to 5, wherein the first transceiver (4₁) is formed by a first Remote Radio Head, RRH, (13₁) and the second transceiver (4₂) is formed by a second RRH (13₂).

7. The system according to claim 6, further comprising at least two base stations (14₁, 14₂) configured to serve the first and second RRHs (13₁, 13₂).

8. The system according to any one of claims 1 to 7, wherein the first and second transceivers (4₁, 4₂) are configured to communicate the same data (D₁, D₂) via the first and second BWPs (BWP₁, BWP₂).

9. The system according to any one of claims 1 to 8, wherein the first and second transceivers (4₁, 4₂) are mounted on a common mounting structure (15).

10. The system according to any one of claims 1 to 9, further comprising at least a third transceiver (4₃) serving a third cell having a third PCI (PCI₃) and overlapping the first and second cells (5₁, 5₂), wherein the third transceiver (4₃) is configured to communicate to the UE (2) in said frequency channel (8), wherein a third SSB (SSB₃) of the third transceiver (4₃) indicating the third PCI (PCI₃) is communicated in said frequency channel (8) at a different time or frequency portion (P₅) than the first and second SSBs (SSB₁, SSB₂) and wherein a third BWP (BWP₃) of the third transceiver (4₃) is communicated in said frequency channel (8) at a different frequency portion (P₆) than the first and second BWPs (BWP₁, BWP₂).

11. A method for communicating with a User Equipment, UE, (2) the method (16) comprising
by a first transceiver (4₁) serving a first cell (5₁) having a first Physical Cell Identity, PCI, (PCI₁), communicating (17) a first Synchronisation Signal Block, SSB, (SSB₁) indicating the first PCI (PCI₁) and a first Bandwidth Part, BWP, (BWP₁) to the UE (2) in a frequency channel (8);
by a second transceiver (4₂) serving a second cell (5₂) having a second PCI (PCI₂) and overlapping the first cell (5₁), communicating (18) a second SSB (SSB₂) indicating the second PCI (PCI₂) and a second BWP (BWP₂) to the UE (2) in said frequency channel (8);
wherein the first and second SSBs (SSB₁, SSB₂) are communicated in said frequency channel (8) at different times (t₁, t₂) or frequency portions (P₁, P₂) and the first and second BWPs (BWP₁, BWP₂) are communicated in said frequency channel (8) at different frequency portions (P₃, P₄).

12. The method according to claim 11, further comprising, by the first and/or second transceiver (4₁, 4₂), communicating (20) to the UE (2) a connection command (C) indicating whether to connect to the first and/or second cell (5₁, 5₂).

13. The method according to claim 11 or 12, wherein at least one of the first and second SSBs (SSB₁, SSB₂) spans more than half (W_{c,h}) of a channel width (W_{c}) of said frequency channel (8) and the first and second transceivers (4₁, 4₂) communicate the first and second SSBs (SSB₁, SSB₂) at different times (t₁, t₂).

14. The method according to any one of claims 11 to 13, wherein the first and second transceivers (4₁, 4₂) communicate the same data (D₁, D₂) via the first and second BWPs (BWP₁, BWP₂) .

15. The method according to any one of claims 11 to 14, further comprising, by a third transceiver (4₃) serving a third cell having a third PCI (PCI₃) and overlapping the first and second cells (5₁, 5₂), communicating a third SSB (SSB₃) indicating the third PCI (PCI₃) and a third BWP (BWP₃) to the UE (2) in said frequency channel (8),
wherein the third SSB (SSB₃) is communicated in said frequency channel (8) at a different time or frequency portion (P5) than the first and second SSBs (SSB₁, SSB₂) and wherein the third BWP (BWP₃) is communicated in said frequency channel (8) at a different frequency portion (Pₛ) than the first and second BWPs (BWP₁, BWP₂).
